# EUROPEAN PATENT SPECIFICATION

(11) **EP 1 790 975 B1**
(45) Date of publication and mention of the grant of the patent: **02.05.2012**
(21) Application number: 06024175.9
(22) Date of filing: 22.11.2006
(51) Int. Cl.: G01N 21/88, G01N 21/47, G01B 11/30, G01N 21/89, B21C 51/00

(54) **A device for welding check of welded trays**
Vorrichtung zur Überprüfung der Schweißung von geschweißten Mulden
Dispositif de contrôle de soudage de plateaux soudés

(30) Priority: 25.11.2005 IT MO20050311
(43) Date of publication of application: 30.05.2007
(73) Proprietor: VIEWTECH S.R.L., 42100 Reggio Emilia (IT)
(72) Inventor: Rinaldi, Stefano, 42100 Reggio Emilia (IT); Orioli, Alessandro, 42100 Reggio Emilia (IT); Sani, Filippo, 42100 Reggio Emilia (IT); Rinaldi, Mauro, 42100 Reggio Emilia (IT)
(74) Representative: Nuzzo, Federica

(56) References cited:
- JP-A- 2 092 168
- JP-A- 2 198 309
- JP-A- 7 248 212
- JP-A- 8 005 563
- JP-A- 8 029 146
- JP-A- 9 075 868
- JP-A- 2000 283 740
- JP-A- 2000 314 705
- JP-A- 2001 108 623
- US-A- 5 905 595

## Description

The invention relates to a device for welding check of welded trays.

The use of trays in plastic material suitable to contain foodstuffs is becoming more and more popular, in order to display for sale edible products such as, for example, previously sliced salami and cold pork meat or pasta.

These trays, after having been filled with the desired product, are covered with a closing film which is mutually attached to the relevant tray by means of welding the said film at the tray edges.

The integrity of the said welding clearly represents a crucial element, even considering that the packing of foodstuffs in the said trays is increasingly carried out in a modified environment, where gases other than air are present which are capable to preserve the features of the said packed foodstuffs unchanged for a longer time, provided that, of course, the tray welding and the relevant covering film remain intact.

A number of devices have been used for some time in order to check the said welding, which are also suitable to detect plastic material micro porosity due to welding, the said micro porosity representing a possible way out for modified environment gases present inside the tray sealed with welding.

In the field of artificial vision, optical systems are well-known in order to check welding integrity. These systems are based on the use of telecentric optics, particularly large-sized optics and illuminating units which can produce high intensity light.

A drawback present in all optical-type checking systems of the commonly known technique is represented by their high costs. For example, the said special telecentric optics can be used to remedy the problem of the visibility of the tray edge along which the welding has been carried out, a problem occurring when the vision of the welded area must be made from the tray bottom, as this latter and not the film is made of transparent material.

In this case, the tray height can be such as the opening β angle of a non special optics results greater than the α angle obtained by the union of the two lines joining, fictitiously, the tray bottom edges to the welding area: under such conditions, the welded edge is not detected by a traditional type optics.

JP2000283740 (Fig. 1) discloses a surface inspection apparatus for extruded component, having illuminators (10-12) facing the sides (1b,1c) and base (1 a) of the extruded component (1) such as a piece of gutter pipe. Mirrors (13,14) are provided for reflecting light from the component to CCD camera (15). Quality detector (17) judges the component quality based on amount of light reflected by the surfaces being judged. The CCD camera is installed over upper portion of conveyor of molded component which receives the reflected light from exterior surfaces through mirrors converging toward the upper surface of the conveyor elements which are installed in side direction. Molded component is photographed from multiple directions.

On the contrary, if the film is transparent there are no reading problems concerning the welded area, as it directly faces the optics and therefore the opening β angle of the said optics can never be greater than the α angle.

A first aim of the present invention is constituted of the possibility to use traditional type and therefore cost-effective optics for checking the welding, even when its reading must be carried out from the tray bottom.

Other aims of the present invention are constituted of the use of limited size optics and illuminating units with modest light intensity.

In particular, the device for welding check of welded trays, in question in the present invention, of the type using a camera equipped with linear acquisition optical sensor and a plurality of illuminating elements contained in a diffused lighting illuminator, said camera and illuminator being positioned above a conveyor element, is characterised by the fact that it comprises:
- two head-coupled conveyor elements, said conveyor elements being suitable for moving forward welded trays;
- a first illuminator containing a plurality of illuminating elements positioned above the said conveyor elements;
- a first linear acquisition camera positioned above the two conveyor elements;
- at least a couple of mirrors positioned above the said two conveyor elements;
- a second illuminator containing a plurality of illuminating elements positioned beneath the said two conveyor elements;
- a second linear camera positioned beneath the two conveyor elements.

This and other characteristics will better emerge from the detailed description that follows of a preferred embodiment, provided in the form of a non-limiting example, with reference to the accompanying drawings, in which:
- figure 1 shows a perspective view of the device according to the present disclosure;

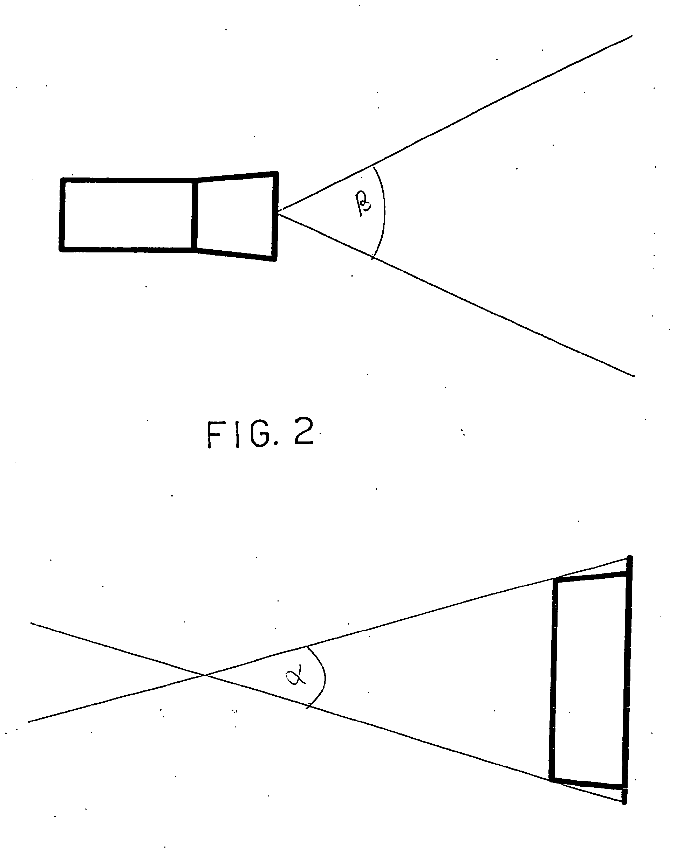

- figure 2 schematically shows both the focal length β angle of traditional optics applied to a linear acquisition camera and the α angle formed of the two lines fictitiously joining the tray bottom edges to the welding area;
- figure 3 schematically shows the mirror positioning in case of reading of transparent tray welded edges, by means of a linear camera positioned above conveyor belts for the said trays;
- figure 4 schematically shows the mirror positioning in case of reading of transparent tray welded edges, by means of a linear camera positioned beneath conveyor belts for the said trays.

With reference to figures, 1 refers to the device according to the present disclosure, 2a and 2b refer to a first and a second conveyor elements, in the shown disclosure of two conveyor belts mutually head-coupled.

Trays 3, already packed and sealed by means of a film welding, are placed on the conveyor belts 2a and 2b.

A first linear acquisition camera 4a, equipped with traditional type optics and a first diffused lighting illuminator 5a, containing a plurality of illuminating elements, is positioned above the said conveyor belts.

A second linear acquisition camera 4b, equipped with traditional type optics and identical to the first camera 4a, is positioned beneath the conveyor belts 2a and 2b. 5b refers to a second diffused lighting illuminator, containing a plurality of illuminating elements which is similar to the first diffused lighting illuminator 5a.

Two mirrors 6 are positioned on a plane which is orthogonal to the moving forward plane of the conveyor belts 2a and 2b, said orthogonal plane being positioned at a slot 7 in the head-coupling point of the said two conveyor belts.

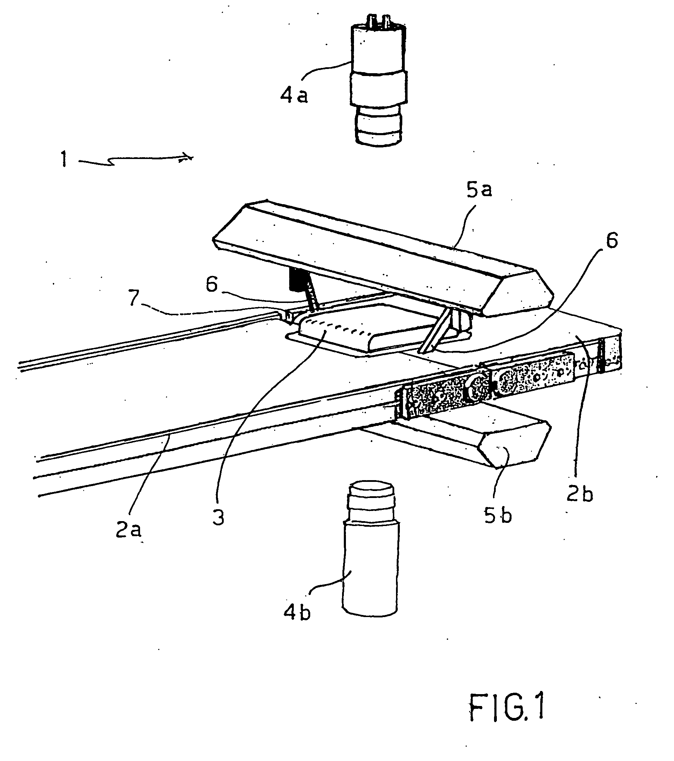

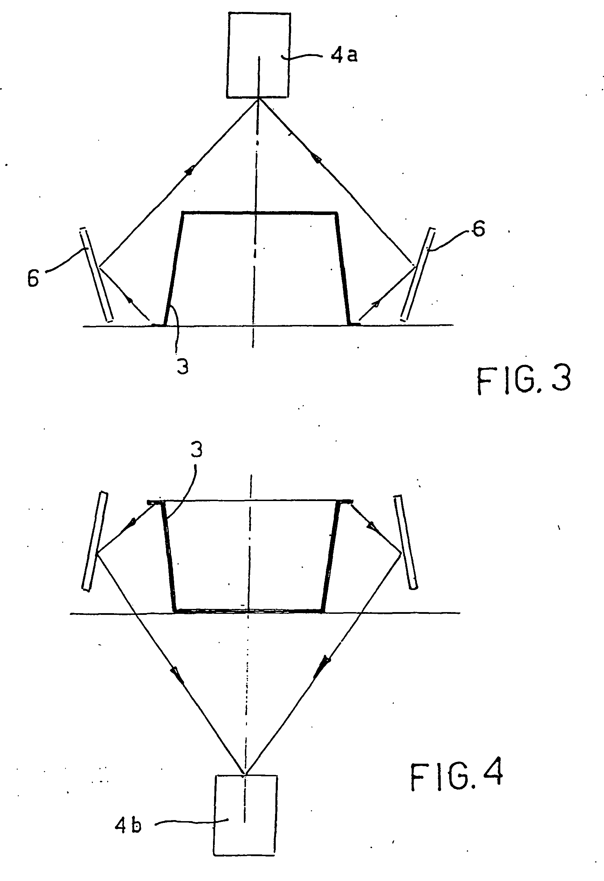

If the reading of the welded area is carried out from the bottom of the tray 3, the two mirrors 6 are positioned in a converging way towards the conveyor belts 2a and 2b, as shown in figures 1 and 3. If the reading of the welded area is carried out by the linear acquisition camera positioned beneath the said conveyor belts, the two mirrors 6 are position in a diverging way towards the conveyor belts 2a and 2b, as shown in figure 4.

The two mirrors 6 are of the so-called "front surface" type.

There will now follow a description of the functioning of the invention in question with reference to the figures enclosed.

The present invention can be applied each time the check of the welded edge of each tray 3 is carried out by placing the linear camera on the tray side and simultaneously the said tray has a height such as the β angle of the camera optics is greater than the α angle obtained by the union of the two ideal lines joining the ends of the tray 3 welded edge.

The present disclosure is applicable both in the case shown in figure 3 and in the case shown in figure 4, as, according to the position of the tray 3 on the conveyor belts 2a and 2b, the camera 4a, 4b shall be positioned above or beneath the said conveyor belts respectively.

It should be noted that, without the application of the present disclosure and in the above described conditions, the edges of each tray 3 which are parallel to the moving forward direction of the conveyor belts 2a and 2b cannot be read by a linear acquisition camera equipped with traditional type optics.

It shall be necessary to adjust the position of the two mirrors 6 so that the welded edge line acquired by the linear camera is reflected towards the said linear camera; the adjustment of the position of the said two mirrors shall result in the mirrors being convergent towards the surface of the two conveyor belts supporting the trays 3, as shown in figures 1 and 3, thus making it possible to detect the welded edges even using a traditional type camera.

The present device also allows for a remarkable use flexibility by using a second linear acquisition camera 4b, equipped with traditional type optics and identical to the first linear camera 4a, as well as a second diffused lighting illuminator 5b equipped with relative illuminating units, the said second camera and second diffused lighting illuminator being positioned beneath the two conveyor belts 2a and 2b.

The welded edge reading shall be carried out by using the welded edge lines detectable through the slot 7.

The use flexibility related to the presence of the second linear camera and the second diffused lighting illuminator positioned beneath the conveyor belts 2a and 2b was discussed, since the said presence is functional to the device configuration; in fact, due to a number of reasons, during the production procedure of the trays 3, the tray positioning on the conveyor belts 2a and 2b may change, as shown in figures 3 and 4.

By using the linear camera positioned beneath the said conveyor belts and the diffused lighting illuminator 5b, the mirrors 6 shall be moved as to diverge with respect to the plane of the conveyor belts supporting trays 3, as illustrated in figure 4.

A first advantage of the present invention is constituted of the possibility to use linear cameras equipped with traditional optics and therefore with limited costs and dimensions.

A second advantage of the present invention consists in the operating flexibility of the device, ensured by a second linear camera with traditional type optics and a second illuminator positioned beneath the conveyor belts supporting the trays to be checked.

During the description of the present invention explicit reference has been made to a diffused lighting type illuminator.

## Claims

1. A device (1) for welding check of welded trays of the type using a camera equipped with linear acquisition optical sensor and a plurality of illuminating elements contained in a diffused lighting illuminator said camera and illuminator being positioned above a conveyor element, comprising :
- Two head-coupled conveyor elements (2a,2b), said conveyor elements being suitable for moving forward welded trays (3), a slot (7) existing at the head coupling of the said conveyor elements;
- a first illuminator (5a) containing a plurality of diffused illuminating elements positioned above the said conveyor elements;
- a first linear acquisition camera (4a) positioned above the two conveyor elements (2a, 2b) ;
- at least a couple of mirrors (6) positioned on a plane which is orthogonal to the moving forward plane of the conveyor elements above the said two conveyor elements in proximity of the slot (7), wherein each mirror element (6) is placed laterally to each tray (3) moving forward on the conveyor elements (2a, 2b)diverging towards the conveyor elements;
- a second illuminator (5b) containing a plurality of diffuse illuminating elements positioned beneath the said two conveyor elements;
- a second linear camera (4b) positioned beneath the two conveyor elements for detecting welded edge lines of the weld trays through the slot.

2. A device according to claim 1 and 2, **characterised by** the fact that at least a couple of mirror elements (6) is positioned on a plane which is orthogonal to the moving forward direction of the trays (3) said plane corresponding to the acquisition line of a first linear camera (4a) and to a slot (7) existing at the head coupling of the two conveyor elements (2a, 2b).

3. A device according to the previous claims, **characterised by** the fact that each mirror element (6) is angled with respect to the reciprocally opposing welded edges of each tray (3).

## Patentansprüche

1. Vorrichtung (1) zur Kontrolle der Schweißung von Schweißschalen eines Typs, der eine Videokamera mit optischem Sensor zur linearen Erfassung und mehrere Beleuchtungselemente umfasst, die in einem Beleuchtungsgerät für Streulicht enthalten sind, wobei die Videokamera und das Beleuchtungsgerät über einer Fördervorrichtung mit folgenden Bestandteilen positioniert sind:
- Zwei am Kopfende verbundene Fördervorrichtungen (2a, 2b), zur Vorwärtsbewegung der Schweißschalen (3), eine Rinne (7) an der Verbindung dieser Fördervorrichtungen am Kopfende;
- Ein erstes Beleuchtungsgerät (5a) mit mehreren Beleuchtungselementen für gestreutes Licht, die über den genannten Fördervorrichtungen positioniert sind;
- Eine erste Videokamera zur linearen Erfassung (4a), positioniert über den beiden Fördervorrichtungen (2a, 2b);
- Mindestens ein Paar von Spiegeln (6), positioniert auf einer zur vorwärts bewegbaren Ebene der Fördervorrichtungen über den beiden genannten Fördervorrichtungen in der Nähe der Rinne (7) rechtwinklig angeordneten Fläche, wobei jedes Spiegelelement (6) sich seitlich zu jeder vorwärts auf den Fördervorrichtungen (2a, 2b) durchlaufenden Schale (3) zu den Fördervorrichtungen gedreht angeordnet ist;
- Ein zweites Beleuchtungsgerät (5b) mit mehreren Beleuchtungselementen für gestreutes Licht, über den beiden genannten Fördervorrichtungen angeordnet;
- Eine zweite lineare Videokamera (4b), die über den beiden Fördervorrichtungen angeordnet ist und zur Erfassung der geschweißten Ränder der Schweißschalen mittels der Rinne dient.

2. Vorrichtung gemäß Patentanspruch 1, **dadurch gekennzeichnet, dass** mindestens ein Paar der Spiegelelemente (6) auf einer zur Richtung der Vorwärtsbewegung der Schalen (3) rechtwinkligen Fläche angeordnet ist, wobei diese Ebene der Erfassungslinie einer ersten linearen Videokamera (4a) und einer Rinne (7) an der Verbindung der Kopfteile beider Fördervorrichtungen (2a, 2b) entspricht.

3. Vorrichtung gemäß den vorstehenden Patentansprüchen, **dadurch gekennzeichnet, dass** jedes Spiegelelement (6) im Winkel zu den gegenüberliegenden geschweißten Rändern jeder Schale (3) angeordnet ist.

## Revendications

1. Dispositif (1) pour le contrôle de la soudure de plateaux soudés du type utilisant une caméra munie d'un capteur optique de saisie linéaire et d'une pluralité d'éléments d'éclairage contenus dans un diffuseur, lesdits caméra et diffuseur étant positionnés au-dessus d'un élément de transport, comprenant:
- deux éléments de transport accouplés de tête (2a, 2b), lesdits éléments de transport étant destinés à faire coulisser vers l'avant les plateaux soudés (3), une rainure (7) étant présente au niveau de l'accouplement de tête desdits éléments de transport ;
- un premier diffuseur (5a) contenant une pluralité d'éléments de diffusion de la lumière positionnés au-dessus desdits éléments de transport ;
- une première caméra de saisie linéaire (4a) positionnée au-dessus des deux éléments de transport (2a, 2b) ;
- au moins une paire de miroirs (6) positionnés sur un Plan orthogonal par rapport au plan coulissant vers l'avant des éléments de transport au-dessus desdits deux éléments de transport à proximité de la rainure (7), sur lequel chaque élément à miroir (6) est placé latéralement par rapport à chaque plateau (3) qui coulisse vers l'avant sur les éléments de transport (2a, 2b) en divergeant vers les éléments de transport ;
- un deuxième diffuseur (5b) contenant une pluralité d'éléments de diffusion de la lumière positionnés en dessous desdits deux éléments de transport ;
- une deuxième caméra linéaire (4b) positionnée en dessous desdits deux éléments de transport pour la détection des lignes de bord soudées des plateaux soudés à travers la rainure.

2. Dispositif selon la revendication 1, **caractérisé par le fait qu'**au moins une paire d'éléments à miroir (6) est positionnée sur un plan orthogonal par rapport à la direction de translation vers l'avant des plateaux (3), ledit plan correspondant à la ligne de saisie d'une première caméra linéaire (4a) et à une rainure (7) présente au niveau de l'accouplement de tête des deux éléments de transport (2a, 2b).

3. Dispositif selon les revendications précédentes, **caractérisé par le fait que** chaque élément à miroir (6) est orienté par rapport aux bords soudés réciproquement opposés à chaque plateau (3).
